# EUROPEAN PATENT APPLICATION

(11) **EP 3 560 674 A1**
(43) Date of publication of application: **30.10.2019**
(21) Application number: 18173027.6
(22) Date of filing: 17.05.2018
(51) Int. Cl.: B29C 45/14, B05B 1/24, E03B 9/20, B29L 23/00

(54) **CONDUIT FOR A LIQUID DISPENSER, METHOD OF PRODUCING IT AND USE THEREOF**

(71) Applicant: Brita GmbH, 65232 Taunusstein (DE)
(72) Inventor: DUCHARDT, Thomas, 63069 Offenbach am Main (DE); RAZIN, Denis, 65199 Wiesbaden (DE); LUX, Stefan, 55218 Ingelheim (DE); BUT, Alexej, 49846 Hoogstede (DE)

(57) **Abstract**

The invention relates to a conduit (13) for a liquid dispenser which includes a tube (20) for carrying liquid and a heating device for heating at least a section of the tube (20). The heating device includes a part (31) for fixing the heating device to the tube (20). The part (31) is a part injection-moulded over the tube (20) along at least a section of a length of the tube (20). The invention also relates to a method of producing said conduit and to a use thereof.

## Description

The invention relates to conduit for a liquid dispenser, including:
a tube for carrying liquid; and
a heating device for heating at least a section of the tube, wherein the heating device includes a part for fixing the heating device to the tube.

The invention also relates to a method of manufacturing a conduit for a liquid dispenser, e.g. a conduit according to any one of the preceding claims, including
providing a tube for carrying a liquid; and
fixing a heating device for heating at least a section of the tube to the tube.

The invention also relates to a dispenser.

The invention also relates to a use of a conduit for a liquid dispenser.

DE 203 01 999 U1 discloses a device for preventing a build-up of germs on water fountains for human use. The dispensing opening and/or the region of the dispensing opening is electrically heated to prevent a retrograde build-up of germs. Electrical heating can be effected in different ways, e.g. with the aid of a sleeve with a heating coil embedded in the sleeve, wherein the sleeve forms both the thermal insulation and the mechanical support. The sleeve surrounds the end of the water supply tube. Alternatively, the heating coil can be integrated into the conduit tube, such that an annular recess is formed in the tube wall and thus space for inserting the heating coil, wherein the space may be filled with an insulating lining mass, in which the heating coil is embedded.

A problem of both alternatives is that the transfer of heat to the tube may be sub-optimal due to movement of the windings away from the tube if the coil is inserted into an annular recess that is then filled with insulating material. The variant with a sleeve may have the same problem, unless an extra device like screw clamp is provided. Even then, the screw clamp may loosen over the course of time.

It is an object of the invention to provide a conduit, method of manufacturing it, dispenser and use of the conduit, in which the heating device is reliably held in a relatively tight relation to the tube.

This object is achieved according to a first aspect by the conduit according to the invention, which is characterised in that the part for fixing the heating device to the tube is a part injection-moulded over the tube along at least a section of a length of the tube.

The injection-moulded part is recognisable as such by, for example, the injection points and parting line or lines on the part. In the injection-moulding process, a cavity between the mould and the tube is filled with material under pressure that ensures that the heating device is pressed close to the tube. Thus, a relatively reliable connection is formed with relatively few parts. The conduit is suitable for use in a beverage dispenser as a throughflow heater or, more preferably, as a barrier for preventing retrograde contamination with germs. Retrograde contamination refers to the transfer of germs from the outlet spout of the dispenser in the direction opposite the flow of liquid, in use.

In an embodiment, the injection-moulded part is arranged around the tube.

The injection-moulded part may completely surround the tube or be interrupted only by one or more radially extending separators, e.g. where the injection-moulded part is electrically conducting. The heating device is thus fixed to the tube on the exterior of the tube, so that only the material of the tube contacts the liquid to be dispensed, in use. This allows the heating device to be made of materials that have not necessarily been certified as safe for contact with food. Furthermore, the interior surface of the tube can be relatively smooth, in particular devoid of recesses in which liquid can stagnate.

In an embodiment, the injection-moulded part is made of at least a polymer material.

It may be made of a blend of polymer materials. It may be a composite of one or more polymer materials and one or more other materials, e.g. reinforcing fibres. The material of the injection-moulded part will generally have good heat-resistance. A suitable material is polyphenylsulphide, optionally reinforced with glass fibres.

In an embodiment, the heating device is an electrical heating device.

This allows for temperature control or regulation, because the electrical power supplied to the electrical heating device can be regulated. The heating device may comprise an induction heater or a thermoelectric heating device, for example.

A variant of this embodiment includes at least one electrical connecting lead of which a section is embedded in the injection-moulded part.

The injection-moulded part thus shields at least the embedded section and ensures that the electrical connecting lead or leads is or are relatively unlikely to become attached.

In a particular variant, the section is an end section in electrically conducting contact with a terminal.

The terminal may be an end of a heating wire or an electrical connector, e.g. a ferrule or the like. Soldering can generally be dispensed with in this embodiment.

In a variant in which the heating device is an electrical heating device, the conduit includes a separator arranged between an electrically conducting part of the heating device and the tube, wherein the separator is made of a material having a higher electrical resistivity than that of the electrically conducting part.

The tube can be made of metal in this embodiment. The electrically conducting part can be held in relatively tight relation to the tube by the injection-moulded part or the latter may itself be electrically conducting. The separator prevents short circuits.

In a variant in which the heating device is an electrical heating device, the heating device includes a resistive heating part.

Heat generated by the resistive heating part is conducted to the tube, in use. The tube can be made of a suitable heat-conducting material that is also certified for contact with liquids for human consumption. Such materials generally do not include the alloys most suitable for inductive heating. The injection-moulded part shields the resistive heating part from the environment and holds it in good heat-conducting relation.

In a particular variant hereof, the resistive heating part has a positive temperature coefficient.

In this embodiment, (local) overheating is prevented without elaborate temperature control. The resistivity increases with temperature, e.g. exponentially, to limit the amount of heat generated.

In a particular embodiment in which the heating device is an electrical heating device that includes a resistive heating part, the resistive heating part is comprised in the part injection-moulded onto the tube.

This embodiment has very few parts. Assembly is simplified and there are fewer interfaces that might limit heat conduction.

In another variant of the embodiment in which the heating device is an electrical heating device that includes a resistive heating part, the resistive heating part includes a wound heating wire.

This embodiment is easier to assemble than a variant including a heating foil. Special terminals for connecting the foil to power supply leads can be dispensed with. The heating wire is relatively easy to position.

In a particular variant hereof, the conduit further includes a carrier, wherein the heating wire is wound around the carrier and the carrier is arranged between the tube and the injection-moulded part.

The carrier facilitates the winding of the heating wire and keeps it in place during the injection-moulding process. The turns of the heating wire can be distributed relatively uniformly, thus preventing localised overheating in use. Furthermore, the carrier can have a relatively simple shape, e.g. essentially that of a spool, onto which the heating wire is easily wound. By contrast, the tube can have a shape less suitable for directly winding the heating wire onto. Such a carrier can be slid onto the tube with the heating wire already in place, prior to the injection-moulding process. The carrier may also help insulate the heating wire electrically from the tube, although the heating wire will generally be provided with some form of insulating coating or cladding as well.

In a variant of this embodiment, the carrier is provided with a flange at at least one end.

The flange or flanges facilitate placement of the heating wire and holding it in place.

In an embodiment in which the heating device is an electrical heating device that includes a resistive heating part including a wound heating wire, the heating wire is a heating wire covered with electrically insulating material.

This allows the turns of the heating wire to be positioned close together, e.g. with adjacent turns touching each other.

In an embodiment of the conduit, at least a section of the tube extending in longitudinal direction from one end of the tube to at least an end of the heating device distal to that end of the tube is straight.

This embodiment allows the heating device or part of the heating device to be slid onto the tube during manufacturing before being fixed in the injection-moulding process. The part slid onto the tube may have an inner diameter corresponding to the outer diameter of the straight tube section to within a certain tolerance range, so that the heating device can be clamped onto the tube relatively tightly.

In an embodiment, the tube is made of metal, e.g. stainless steel.

This embodiment has good heat-conducting properties. Stainless steel is suitable for contact with liquids intended for human consumption.

In an embodiment, the tube has a circular cross-section.

If the hollow interior of the tube has the circular cross-section transverse to the longitudinal direction corresponding to the direction of flow, stagnation zones are largely avoided. If the exterior of the tube has a circular cross-section transverse to the longitudinal direction, the injection-moulded part can clamp the heating device to the tube relatively uniformly.

In an embodiment, the tube is provided with at least one recess, e.g. a circumferential groove, for engaging a fitting.

The tube can thus be relatively short, e.g. forming essentially an outlet of the dispenser. It can be connected to a conduit made of a different material via the fitting. Such a conduit could be a flexible tube for example, which would be easier to arrange inside a relatively compact dispenser housing.

In an embodiment, the injection-moulded part includes at least one feature arranged to co-operate with a feature of a separate component of the heating device to lock the separate component to the injection-moulded part.

Thus, separate fasteners can be dispensed with. Parts less able to withstand the conditions prevailing during the injection-moulding process can be attached afterwards.

In a variant of this embodiment, the separate component closes a space accommodating a further component of the heating device.

The further component is protected relatively well and can be a component mounted after injection-moulding.

In an embodiment of the conduit, the heating device further includes a component arranged in heat-conducting relation to at least one of the injection-moulded part and the tube.

This may be a temperature sensor or fuse to provide for protection against overheating.

In a variant of this embodiment in which the injection-moulded part also includes at least one feature arranged to co-operate with a feature of a separate component of the heating device to lock the separate component to the injection-moulded part, the component arranged in heat-conducting relation to at least one of the injection-moulded part and the tube is clamped thereto by the separate component locked to the injection-moulded part.

According to another aspect of the invention, the method of manufacturing a conduit for a liquid dispenser is characterised in that the step of fixing the heating device includes placing at least the tube in a mould and injection-moulding a part of the heating device over at least a section of a length of the tube.

The heating device is thus fixed in place with relatively few components and close to the tube.

According to another aspect of the invention, there is provided a dispenser for dispensing liquids, including a conduit according to the invention.

In an embodiment, the conduit forms a dispensing outlet.

The conduit is arranged such that liquid is dispensed directly through an outlet opening at a free end of the tube. There is no contact between the liquid and other parts of the dispenser once the liquid has exited the tube.

An embodiment of the dispenser further includes a fitting connecting the conduit to one of a manifold and a further conduit.

The further conduit or manifold may be made of a different material via the fitting. An example of such a conduit could be a flexible tube for example, which would be easier to arrange inside a relatively compact dispenser housing. The further conduit or manifold may conduct heat less well than the tube.

In an embodiment of the dispenser, the heating device is an electrical heating device, and the dispenser includes a power control device for supplying electrical power to the heating device.

The temperature of the section of the tube heated by the heating device can thus be controlled or regulated relatively well.

In a variant of this embodiment, the power control device is arranged to supply electrical pulses to the electrical heating device at intervals, e.g. pulses having a duration in the order of seconds.

The level of heating can be set by selecting the duration of the pulses. Using a relatively low pulse frequency helps avoid electromagnetic compatibility problems and noise. Conventional pulse-width modulation may be used alternatively.

A variant of the embodiment in which the power control device is arranged to supply electrical pulses to the electrical heating device at intervals further includes at least one temperature sensing device for supplying a temperature signal, wherein the power control device is arranged to supply electrical pulses to the electrical heating device in accordance with a scheme selected from among a plurality of pre-defined alternatives on the basis of the temperature signal.

Thus, closed-loop control is not necessary, but an adequate temperature can still be achieved. The temperature sensing device may be arranged to sense ambient temperature in one embodiment. In an alternative embodiment, it may be arranged to sense the temperature of the tube or heating device.

According to another aspect, the invention provides for the use of a conduit according to the invention to counter retrograde contamination in a liquid dispenser.

Although another use, such as as a throughflow heater, is conceivable, the use to counter retrograde contamination is easier to implement with low-voltage power supplies. In this use, the tube is locally heated to create a thermal barrier for halting upstream progress of the contamination.

The invention will be explained in further detail with reference to the accompanying drawings, in which:
- Fig. 1: is a front view of a dispenser;
- Fig. 2: is a schematic diagram showing selected components of the dispenser;
- Fig. 3: is a perspective view of a conduit provided with a heating device and comprised in the dispenser;
- Fig. 4: is a plan view of the conduit of Fig. 3;
- Fig. 5: is a cross-sectional view of the conduit of Figs. 3 and 4;
- Fig. 6: is a further cross-sectional view of the conduit of Figs. 3-5;
- Fig. 7: is a cross-sectional view through the conduit and a cap of the heating device;
- Fig. 8: is a schematic diagram showing pulses supplied to the heating device in use; and
- Fig. 9: is a flow chart illustrating steps in a method of manufacturing the conduit.

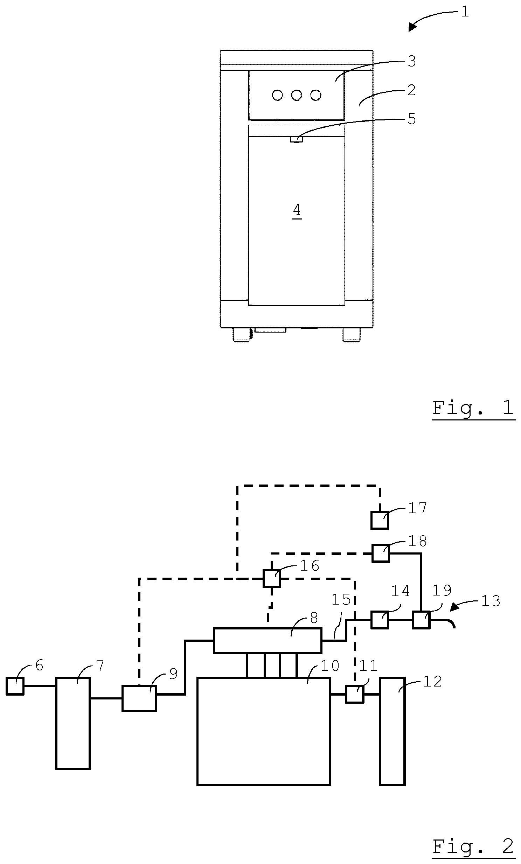

A dispenser 1 for dispensing beverages is shown in the form of a table-top device (Fig. 1). The illustrated dispenser is conceived for dispensing various forms of treated aqueous beverages, in particular treated drinking water. Such a dispenser is also referred to as a water bar. The illustrated dispenser 1 is configured for dispensing filtered water at ambient temperature, chilled water and chilled sparking water, e.g. with a selectable degree of CO₂. In other embodiments, the dispenser 1 may further or alternatively be configured to dispense untreated mains water, boiling or hot water (at a temperature above 90°C), for example. Other formats, such as a floor-mounted appliance, are possible.

The dispenser 1 includes a housing 2 and a user interface 3 for selecting the type of beverage to be dispensed. A recess 4 is provided for placing a vessel under an outlet 5 to collect the beverage. The vessel may be a drinking glass or a bottle, for example. Measures are provided for preventing retrograde contamination by germs via the outlet 5, as will be explained. This type of contamination occurs through contact with the outlet 5, whereby germs are transferred to the outlet 5 and spread into the interior of the outlet 5. Minimising the risk of such contamination makes the dispenser 1 suitable for use in settings such as waiting rooms in doctors' surgeries.

The dispenser 1 includes (Fig. 2) an inlet fitting 6 for connecting the dispenser to a supply of drinking water, e.g. the water mains. It further includes a filter system 7. The filter system 7 may be a combination of a replaceable filter cartridge and a filter head, for example. The type of treatment carried out by the filter system may include mechanical filtration, including membrane filtration, softening or decarbonisation (reduction of carbonate hardness) through treatment by ion exchange resin, other types of sorption, including treatment by activated carbon or heavy metal scavengers, and the like, as well as combinations thereof. The filter system 7 may also be arranged to treat the water by elution, e.g. to adapt its mineral content.

The filtered system 7 is connected to a manifold 8 provided with solenoid valves (not shown separately) via a pump 9. The manifold 8 is arranged to direct the water to a cooler 10 containing a carbonator (not shown separately), so that the water is either chilled or chilled and carbonated. A gas supply valve 11 controls the delivery of CO₂ to the carbonator from a gas container 12, which may also be a replaceable cartridge.

The treated water returns to the manifold 8, with one or more valves provided therein controlling the delivery of treated water to an outlet conduit 13. The outlet conduit 13 is a separate part connected by means of a fitting 14 to an interconnecting conduit 15 extending from the manifold 8. The interconnecting conduit 15 may be a flexible tube, for example. Thus, the outlet conduit 13 can be relatively short, which makes it easier to manufacture. Also, the outlet conduit 13 can be made of a different material, in particular one that conducts heat better than the material of the interconnecting conduit 15.

The operation of the dispenser 1 is controlled by a controller 16. The controller 16 is provided with a measurement signal from a temperature sensor 17. The controller 16 also directs the operation of a power control device 18 that is arranged to supply electrical power to a heating device 19 of the outlet conduit 13. This heating device 19 is arranged to heat a section of the outlet conduit 13 to create a thermal barrier for preventing or at least countering retrograde contamination.

The outlet conduit 13 includes a tube 20 made of material that conducts heat relatively well, e.g. metal. It may be made of stainless steel, which is certified for contact with beverages. The tube 20 may have a wall thickness below 1 mm, e.g. between 0.5 and 1 mm. The tube 20 comprises an essentially straight, circle-cylindrical section 21 that transitions into an outlet section 22 via a curved, elbow-shaped section 23. The curved section 23 has an essentially constant radius of curvature. In use, the circle-cylindrical section 21 may be oriented essentially horizontally, with the outlet section 22 depending downwards. This reduces the overall height of the dispenser 1. The heating device 19 need not be located above the outlet section 22. The absence of unnecessary bends means that stagnation zones are avoided, further contributing to the prevention of contamination. With the outlet section 22 at a lower level than the section 21 at the opposite end of the tube 20 due to the curved section 23, the tube 20 is essentially emptied of water every time dispensing ends.

A groove 24 is provided on the exterior of the circle-cylindrical section 21, which allows for a shape-lock with the fitting 14. Alternatively-shaped features fulfilling the same function of co-operating with the fitting 14 to provide a shape-lock may be used in other embodiments.

Leads 25a,b provide an electrical connection between the power control device 18 and the heating device 19. The leads 25a,b are provided with an insulating cladding and arranged to withstand temperatures up to at least 200°C.

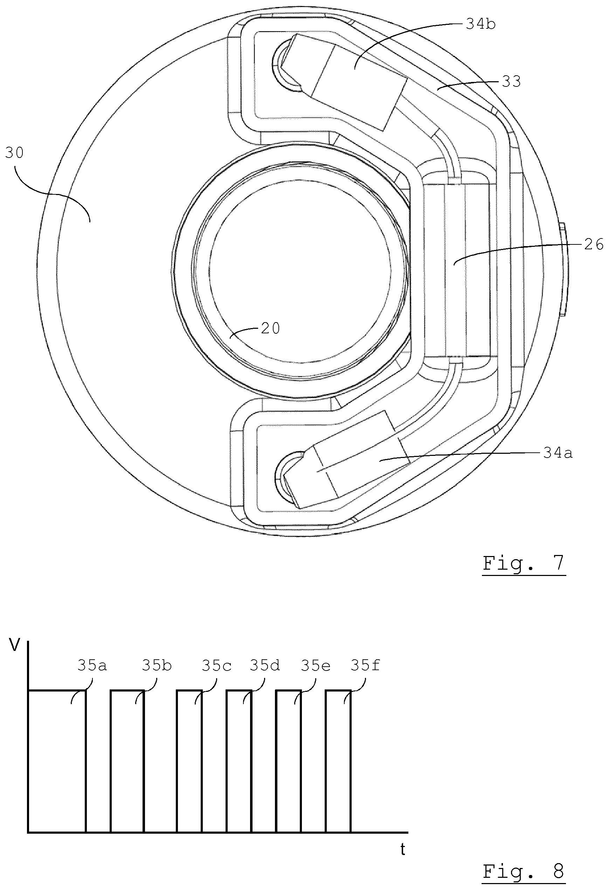

An end of a first lead 25a is crimped to a wire section extending from a thermal fuse 26 (Fig. 7). An end of a second lead 25b is crimped to a heating wire 27 arranged in a coil on a carrier 28. The heating wire 27 is coated with an electrically insulating coating, for example made of polytetrafluoroethylene, so that adjacent turns of the heating wire 27 can touch each other.

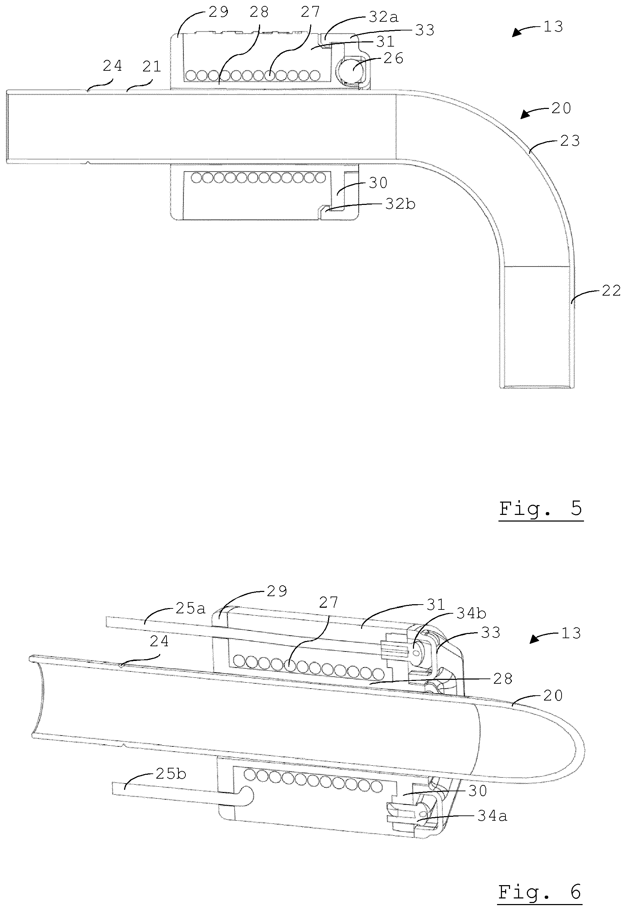

The carrier 28 is generally spool-shaped (Figs. 5,6). It is provided with flanges 29,30 to locate the coiled heating wire 27. Thus, the heating wire 27 can be coiled relatively easily onto the carrier 28. The carrier 28 may be made of electrically insulating material, for example.

The carrier 28 is fixed to the tube 20 by a mass 31 of injection-moulded material that clamps it tightly against the tube 20. This also presses the heating wire 27 close to the carrier 28. Because the heating wire 27 is arranged for resistive heating, relatively good heat transfer is achieved. The injection-moulded material also encapsulates the connection between the lead 25b and the heating wire 27 and generally shields the heating wire 27 from the environment.

In an embodiment, the mass 31 of injection-moulded material may be over-moulded so as to extend to the exterior surface of the tube 20 at at least one end of the heating device 19. This establishes a bond that further contributes to fixing the heating device 19 to the tube 20.

The injection-moulded material may be a composite such as glass fibre-reinforced polyphenylsulphide. An example is available from Ticona GmbH under the trade mark Fortron 1130L4.

The carrier 28 and the mass 31 of injection-moulded material may have the same material composition.

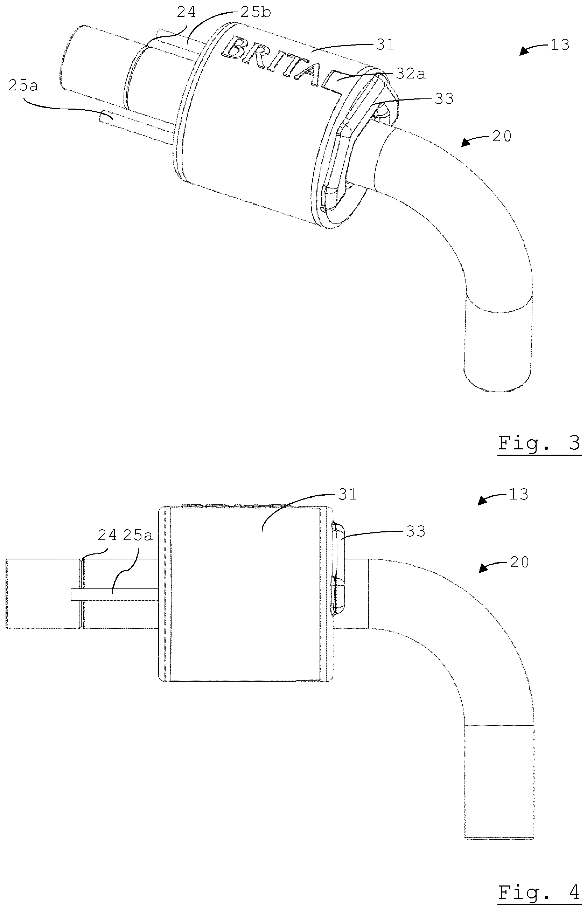

The mass 31 of injection-moulded material has at least one moulded feature on its exterior. In the illustrated example, this includes recessed features for co-operating with pawls 32a,b (Figs. 3,5) of a cap 33. The cap 33 acts as a clamp to press the thermal fuse 26 tightly into contact with the flange 30 in the illustrated embodiment or the mass 31 of injection-moulded material in alternative embodiments. The cap 33 further closes the space accommodating the thermal fuse 26 and terminals 34a,b connecting it to the heating wire 27 and lead 25a.

The thermal fuse 26 is an irreversible thermal fuse 26 in the illustrated embodiment. In an alternative embodiment, it is replaced by a temperature sensing device for conducting a signal to the controller 16.

In use, the power control device 18 is arranged to supply electrical pulses 35a-f to the heating device 19. The voltage of the pulses 35a-f may be 12 V or 24 V, for example. The pulses 35a-f are of different duration and in accordance with a scheme. The controller 16 is configured to select a scheme from among a number of pre-determined schemes in dependence on at least one value of the measurement signal provided by the temperature sensor 17. The temperature sensor 17 may be in close proximity to or in thermal contact with the tube 20 or a different part of the outlet conduit 13, for example. At least a first pulse 35a is of longer duration than at least a final pulse of a sequence corresponding to a scheme. The sequence may have a finite duration and be triggered by an event such as an interaction by a user with the user interface 3, activation of main power switch (not shown) of the dispenser 1 or the elapse of a certain period of time since the last provision of a pulse sequence. The triggering of the provision of the pulse sequence may be temperature-dependent, so that the heating device is operated more frequently at higher ambient temperatures, for example.

The pulse frequency is relatively low, with the duration of at least the longest pulse 35a being at least one second. Thus, electrical interference and noise are avoided.

The heating device 19 is operated such that the temperature of the section of the tube 20 along which the heating device 19 is provided remains below 100°C, e.g. below 90°C. This suffices to create a thermal barrier whilst preventing or at least reducing scaling in the tube 20. The outlet section 22 remains below 50°C to prevent burns, should a user inadvertently touch the outlet 5.

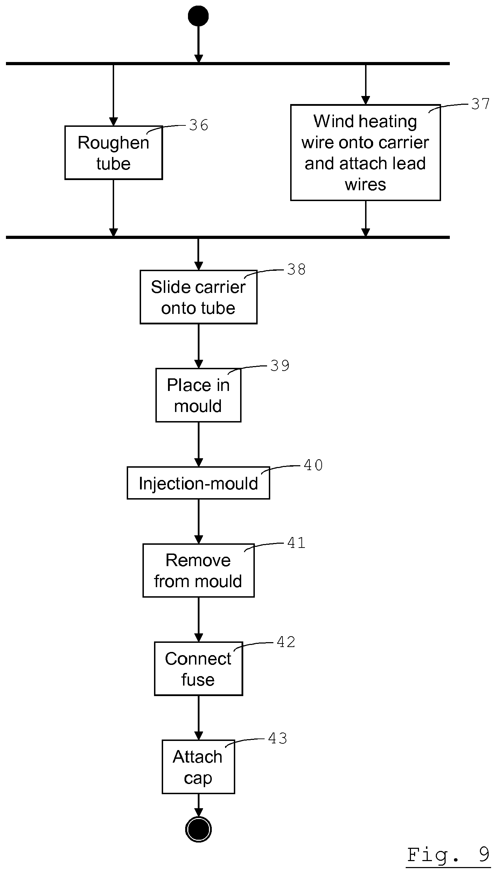

An example of a method of manufacturing the outlet conduit 13 (Fig. 9) includes an optional step 36 of roughening at least a section of the tube 20, where the heating device 19 is to be fixed in position. In parallel, the heating wire 27 is wound onto the carrier 28 and the leads 25a,b are connected (step 37). Then (step 38), the carrier 28 is slid onto the circle-cylindrical section 21 of the tube 20. Because this section 21 is straight and the tube 20 is relatively short, this step 38 is relatively easy to accomplish. The features, in this case the groove 24, for connecting the outlet conduit 13 to the fitting 14 are all recessed, so that the carrier 28 can have an inside diameter corresponding to the outside diameter of the straight section 21 of the tube 20 to within the chosen tolerance ranges.

The assembly is then placed (step 39) in a mould (not shown) enclosing at least the section of the outlet conduit 13 corresponding to the heating device 19. The carrier 28 positions the heating wire 27. Injection-moulding 40 fixes the heating device 19 to the tube 20. The assembly is then removed from the mould (step 41), the thermal fuse 26 is connected (step 42) after the injection-moulded material has cooled down. Finally, the cap 33 is attached (step 43).

The leads 25a,b may be provided with a connector or connectors at their free ends for plugging into sockets of the power control device 18 in the process of mounting the outlet conduit 13 in the dispenser housing 2.

Due to the robust and secure attachment of the heating device 19 to the tube 20, the outlet conduit can be handled and stored relatively easily prior to mounting in the dispenser 1. The injection-moulded material and the cap 33 shield the sensitive components and connections relatively well.

The invention is not limited to the embodiments described above, which may be varied within the scope of the accompanying claims. For example, although an example of a resistive heating device 19 has been used, the heating device 19 may be an inductive heating device in another embodiment. In that case, one or more coiled wires forming induction coils replace the heating wire 27.

In an alternative embodiment using a resistive heating device 19, the heating wire 27 is dispensed with. Instead, the mass 31 of injection-moulded material itself comprises an electrically conducting material or compound. The carrier 28, or an alternative separator having a higher electrical resistivity than the injection-moulded material, separates the electrically conducting material or compound from the tube 20 to prevent short-circuits. A terminal at the end of at least one of the leads 25a,b is embedded in the electrically conducting material. The end of the other lead 25a,b may be connected to the thermal fuse 26 with the latter electrically connected to the electrically conducting material or compound on an opposite side of the expanse of injection-moulded electrically conducting material to the terminal at the end of the other lead 25a,b. Alternatively, the thermal fuse 26 may be dispensed with, so that the ends of both leads 25a,b are embedded in the electrically conducting material or compound on opposite sides of the expanse of electrically conducting material. In that case, the electrically conducting material or compound may have a non-linearly increasing temperature-dependent resistivity to allow the thermal fuse 26 to be dispensed with. An example of a suitable material is PTC rubber, a compound made of polydimethylsiloxane loaded with carbon nano-particles.

In yet another alternative example, a heating foil is used instead of the heating wire 27.

### List of reference numerals

- 1: - dispenser
- 2: - housing
- 3: - user interface
- 4: - recess
- 5: - outlet
- 6: - inlet fitting
- 7: - filter system
- 8: - manifold
- 9: - pump
- 10: - cooler
- 11: - gas supply valve
- 12: - gas container
- 13: - outlet conduit
- 14: - connection fitting
- 15: - interconnecting conduit
- 16: - controller
- 17: - temperature sensor
- 18: - power control device
- 19: - heating device
- 20: - tube
- 21: - circle-cylindrical section
- 22: - outlet section
- 23: - curved section
- 24: - groove
- 25a,b: - leads
- 26: - thermal fuse
- 27: - heating wire
- 28: carrier
- 29: - upstream flange
- 30: - downstream flange
- 31: - injection-moulded part
- 32a,b: - pawls
- 33: - cap
- 34a,b: - terminals
- 35a-f: - pulses
- 36: - step (roughen tube)
- 37: - step (wind heating wire)
- 38: - step (slide carrier onto tube)
- 39: - step (place in mould)
- 40: - step (injection-mould)
- 41: - step (remove from mould)
- 42: - step (connect fuse)
- 43: - step (attach cap)

## Claims

1. Conduit for a liquid dispenser (1), including:
a tube (20) for carrying liquid; and
a heating device (19) for heating at least a section of the tube (20),
wherein the heating device includes a part (31) for fixing the heating device (19) to the tube (20), **characterised in that**
the part (31) is a part injection-moulded over the tube (20) along at least a section of a length of the tube (20).

2. Conduit according to claim 1,
wherein the injection-moulded part (31) is arranged around the tube (20).

3. Conduit according to claim 1 or 2,
wherein the heating device (19) is an electrical heating device (19).

4. Conduit according to any one of the preceding claims,
wherein the heating device (19) includes a resistive heating part (27).

5. Conduit according to claim 4,
wherein the resistive heating part is comprised in the part (31) injection-moulded onto the tube (20).

6. Conduit according to claim 4 or 5,
wherein the resistive heating part (27) includes a wound heating wire.

7. Conduit according to claim 6,
further including a carrier (28),
wherein the heating wire (27) is wound around the carrier (28) and
the carrier (28) is arranged between the tube (20) and the injection-moulded part (31).

8. Conduit according to any one of the preceding claims,
wherein the injection-moulded part (31) includes at least one feature arranged to co-operate with a feature (32a,b) of a separate component (33) of the heating device (19) to lock the separate component (33) to the injection-moulded part (31).

9. Conduit according to any one of the preceding claims,
wherein the heating device (19) further includes a component (26) arranged in heat-conducting relation to at least one of the injection-moulded part (31) and the tube (20).

10. Conduit according to claim 8 and 9,
wherein the component (26) arranged in heat-conducting relation to at least one of the injection-moulded part (31) and the tube (20) is clamped thereto by the separate component (33) locked to the injection-moulded part (31).

11. Method of manufacturing a conduit for a liquid dispenser (1), e.g. a conduit according to any one of the preceding claims, including
providing a tube (20) for carrying a liquid; and
fixing a heating (19) device for heating at least a section of the tube (20) to the tube (20), **characterised in that**
the step of fixing the heating device (19) includes placing at least the tube (20) in a mould and injection-moulding a part (31) of the heating device (19) over at least a section of a length of the tube (20).

12. Dispenser for dispensing liquids, including a conduit (13) according to any one of claims 1-10.

13. Dispenser according to claim 12,
wherein the conduit (13) forms a dispensing outlet (5).

14. Dispenser according to claim 12 or 13,
further including a fitting (14) connecting the conduit (13) to one of a manifold (8) and a further conduit (15).

15. Use of a conduit (13) according to any one of claims 1-10 to counter retrograde contamination in a liquid dispenser (1).
